# EUROPÄISCHE PATENTANMELDUNG

(11) **EP 1 626 419 A2**
(43) Veröffentlichungstag der Anmeldung: **15.02.2006**
(21) Anmeldenummer: 05013461.8
(22) Anmeldetag: 22.06.2005
(51) Int. Cl.: H01G 4/14

(54) **Metallisierter Kunststoff-Folienkondensator**

(30) Priorität: 10.08.2004 DE 102004038863
(71) Anmelder: Westermann, Wolfgang, 68165 Mannheim (DE)
(72) Erfinder: Meender, Rah, 26605 Aurich (DE)
(74) Vertreter: Altenburg, Udo

(57) **Zusammenfassung**

Metallisierter Kunststoff-Folienkondensator mit zwei beidseitig metallisierten Kunststoff-Folien (8,9), wobei die beiden Kunststoff-Folien (8,9) unterschiedliche Metallisierungen (10) aufweisen und diese Metallisierungen (10) derart ausgebildet sind, dass im Luftspalt zwischen den Kunststoff-Folien (8,9) die elektrische Feldstärke im Wesentlichen Null ist. Ein solcher metallisierter Kunststoff-Folienkondensator ist äußerst schallarm und erzeugt im Betrieb nur eine Schallintensität, die um ein Vielfaches geringer als die Schallintensität bei bekannten metallisierten Kunststoff-Folienkondensatoren ist.

## Beschreibung

Die vorliegende Erfindung betrifft einen metallisierten Kunststoff-Folienkondensator gemäß dem Oberbegriff der unabhängigen Ansprüche 2, 6, 10 und 14, wie er z.B. aus der DE 24 62 546 A1 bekannt ist.

Schallarme Kondensatoren werden seit langem in der Elektroindustrie benötigt. Sie werden grundsätzlich dort gebraucht, wo durch eine Wechselspannungsanwendung eine Schallentwicklung im Kondensator stattfindet und diese dann störend auf seine Umgebung wirkt. Solche störenden Schallentwicklungen treten insbesondere bei elektronischen Vorschaltgeräten in der Lichttechnik, bei Telefon und PC in der Kommunikationstechnik, bei Radio und Fernsehen in der Unterhaltungselektronik, bei der Medizin- und Haustechnik und auch bei der allgemeinen Stromversorgungstechnik auf

Trotz unterschiedlicher Maßnahmen, die von der Fachwelt meistens betriebsintern durchgeführt worden sind, ist eine zufriedenstellende Schallreduzierung bei den in Frage stehenden Kondensatoren bisher nicht ereicht worden.

Die Aufgabe der vorliegenden Erfindung besteht daher darin, einen metallisierten Kunststoff-Folienkondensator zu schaffen, der im Betrieb eine deutlich reduzierte Schallintensität erzeugt.

Diese Aufgabe wird gemäß der Erfindung durch einen metallisierten Kunststoff-Folienkondensator gemäß einem der unabhängigen Ansprüche 2, 6, 10 und 14 gelöst. Vorteilhafte Ausgestaltungen dieser erfindungsgemäßen Kondensatoren sind jeweils in den Unteransprüchen 3 bis 5, 7 bis 9, 11 bis 13 und 15 und 16 beansprucht. Im Anspruch 1 wird die Verwendung eines an sich z.B. aus der DE 24 62 254 A1 bekannten metallisierten Kunststoff-Folienkondensators mit beidseitig metallisierten Kunststoff-Folien, bei dem im Betrieb der verbleibende Luftspalt zwischen jeweils benachbarten Kunststoff-Folien feldfrei ist, um die Kunststoff-Folien nicht mit einer Kraft zu beaufschlagen, die diese in Schall erzeugende Bewegungen versetzt, für Anwendungen mit der Anforderung reduzierter Schallintensität beansprucht.

Durch den erfindungsgemäßen Aufbau des metallisierten Kunststoff-Folienkondensators, gemäß welchem im Luftspalt zwischen den Folien des Kondensators keine elektrische Feldstärke vorliegt, wirkt in diesem Luftspalt keine Kraft zur Deformierung der Folien, wodurch eine erhebliche Reduzierung der vom Kondensator erzeugten Schallintensität erreicht wird. Ein elektrisches Feld liegt nur in den als Dielektrikum wirkenden Kunststoff-Folien vor, die auf Grund ihrer relativ großen Dichte durch die hierdurch erzeugte Kraft nur geringfügig verformt werden, so dass hierdurch nur eine geringe Schallintensität erzeugt wird.

Aus der DE-OS 26 23 474 ist an sich ein metallisierter Kunststoff-Folienkondensator mit einem Zwei-Folien-Aufbau mit zwei identisch beidseitig metallisierten Kunststoff-Folien bekannt, wobei die erste Folie zur zweiten Folie um 180° verdreht ist. Darüber hinaus sind die beiden Folien zueinander versetzt. Die Metallisierungen auf den beiden Seiten der Kunststoff-Folie weisen eine unterschiedliche Dicke auf.

Aus der DE-AS 10 93 162, die in der DE-OS 26 23 474 erwähnt ist, ist ebenfalls an sich ein metallisierter Kunststoff-Folienkondensator mit einem Zwei-Folien-Aufbau mit zwei identisch beidseitig metallisierten Kunststoff-Folien bekannt, wobei die erste Folie zur zweiten Folie um 180° verdreht ist. Die Folien sind hierbei nicht zueinander versetzt angeordnet.

Aus der DE-OS 24 18 221 ist ein metallisierter Kunststoff-Folienkondensator mit einer beidseitig metallisierten Kunststoff-Folie bekannt, die gegebenenfalls mit einer unmetallisierten Folie zu einem Kondensator gewickelt wird.

Aus der US 3 093 775 ist ein Wickelkondensator mit einer inneren Reihenschaltung bekannt.

Aus der DE 696 23 588 T2 ist ein metallisierter Kunststoff-Folienkondensator bekannt, bei dem die Metallisierungen Randverstärkungen aufweisen.

Im Nachfolgenden werden Ausführungsbeispiele des erfindungsgemäßen metallisierten Kunststoff-Folienkondensators in Verbindung mit der Zeichnung beschrieben. Darin zeigen:
- Fig. 1a, b: eine erste Ausführungsform des erfindungsgemäßen Kondensators mit einem Zwei-Folien-Aufbau mit interner Reihenschaltung und zu Vergleichszwecken eine entsprechende Ausführungsform eines bekannten Kondensators;
- Fig. 2a, b: eine zweite Ausführungsform des erfindungsgemäßen Kondensators mit einem Vier-Folien-Aufbau und zu Vergleichszwecken eine entsprechende Ausführungsform eines bekannten Kondensators;
- Fig. 3a, b: eine dritte Ausführungsform des erfindungsgemäßen Kondensators mit einem Drei-Folien-Aufbau mit interner Reihenschaltung und zu Vergleichszwecken eine entsprechende Ausführungsform eines bekannten Kondensators;
- Fig. 4a, b: eine vierte Ausführungsform des erfindungsgemäßen Kondensators mit einem Zwei-Folien-Aufbau und zu Vergleichszwecken eine entsprechende Ausführungsform eines bekannten Kondensators;
- Fig. 5: eine schematische Darstellung einer elektrischen Schaltung mit dem zu messenden Kondensator und eines Messaufbaus zur Messung der von dem Kondensator erzeugten Schallintensität; und
- Fig. 6: eine schematische räumliche Darstellung des Messaufbaus zur Messung der Schallintensität eines Kondensators mit Angabe geometrischer Abmessungen.

Im Nachfolgenden werden vier verschiedene Ausführungsformen des erfindungsgemäßen Kondensators und zu Vergleichszwecken vier entsprechende, aus dem bekannten Lieferprogramm der Anmelderin stammende bekannte Kondensatoren beschrieben.

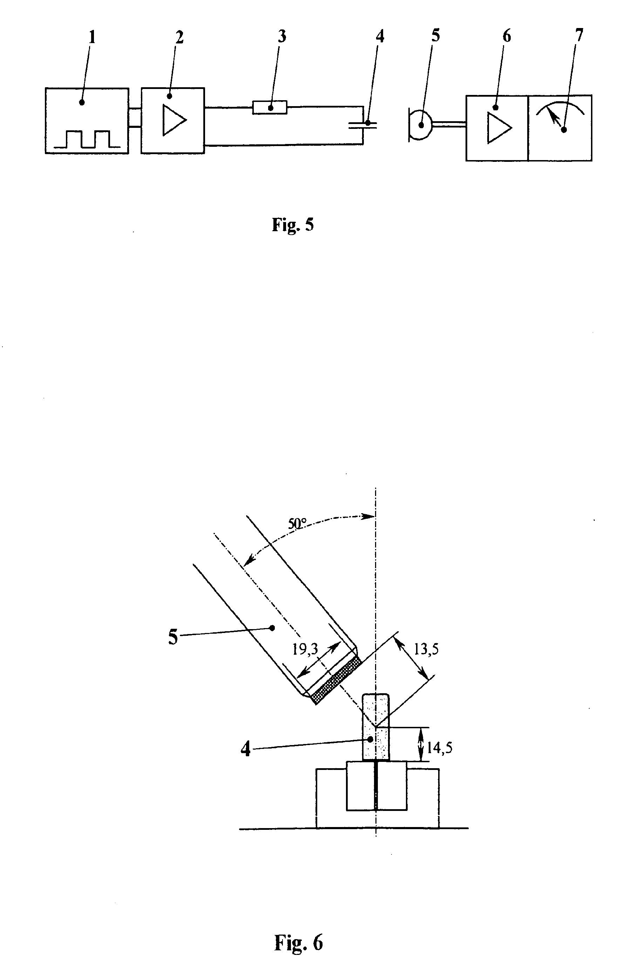

Die Schallintensität der Kondensatoren wird mit Hilfe einer in Fig. 5 dargestellten elektrischen Schaltung und des in der gleichen Figur dargestellten Messaufbaus ermittelt. Die in Fig. 5 dargestellte elektrische Schaltung weist einen Wechselspannungsgenerator 1, z.B. mit einer Frequenz von 16 kHz, einen Verstärker 2, einen Vorwiderstand 3 und einen Kondensator 4, dessen Schallintensität gemessen wird, auf. Die Größe des verwendeten Vorwiderstandes 3 hängt dabei von der Kapazität des Kondensators 4 ab. Der in Fig. 5 dargestellte Messaufbau zur Messung der Schallintensität weist ein Mikrofon 5, einen Verstärker 6 und ein Schallintensität-(Dezibel)-Messgerät 7 auf. In Fig. 6 ist die räumliche Zuordnung des Mikrofons 5 und des Kondensators 4 dargestellt, wobei die Maße in mm angegeben sind.

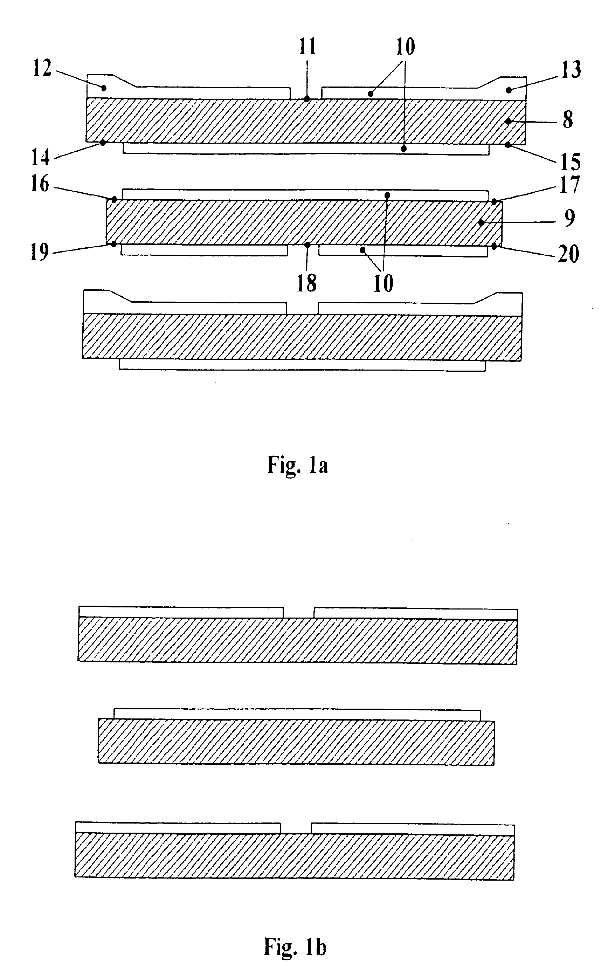

In Fig. 1a ist eine erste Ausführungsform des erfindungsgemäßen Kondensators mit einer ersten Kunststoff-Folie 8 und einer zweiten Kunststoff-Folie 9 mit beidseitig aufgetragenen Metallisierungen 10 dargestellt. Die erste Kunststoff-Folie 8 weist auf ihrer oberen Seite einen mittleren Freirand 11 und Randverstärkungen 12 und 13 und auf ihrer unteren Seite an den Rändern Freiränder 14 und 15 auf. Die zweite Kunststoff-Folie 9 weist auf ihrer oberen Seite an den Rändern Freiränder 16 und 17 und an ihrer unteren Seite einen mittleren Freirand 18 und an den Rändern Freiränder 19 und 20 auf. Wie dargestellt, weist der Kondensator einen Zwei-Folien-Aufbau mit einer internen Reihenschaltung und, von oben nach unten gezählt, einer ersten ersten Kunststoff-Folie 8 und einer zweiten zweiten Kunststoff-Folie 9 auf. Die zweite Kunstoff-Folie 9 ist schmaler als die erste Kunststoff-Folie 8.

Die erste und zweite Kunststoff-Folie 8, 9 besteht aus Polyester (PET) oder Polypropylen (PP). Für die nachfolgenden Vergleichsmessungen wurde für beide Kunststoff-Folien 8, 9 PET verwendet.

In Fig. 1b ist zu Vergleichszwecken ein entsprechender bekannter Kondensator aus dem Lieferprogramm der Anmelderin, dort mit MKS 4 bezeichnet, dargestellt. Wie man aus Fig. 1b erkennt, sind bei diesem bekannten Kondensator keine Randverstärkungen und keine Metallisierungen auf den unteren Seiten der Folien vorgesehen. Beide Kunststoff-Folien bestehen ebenfalls aus PET.

Folgende Schallintensitäten wurden bei den Kondensatoren gemäß Fig. 1a und 1b gemessen, wobei die Kondensatoren eine Kapazität/Nennspannung von 1,0 µF/630 V hatten:
- Bekannter Kondensator (Fig. 1b): φ = 58,7 dB, - 19,7 bis + 13,8 dB, σ = 7,9
- Neuer Kondensator (Fig. 1a): φ = 44,9 dB, - 9,0 bis + 15,1 dB, σ = 5,0.

Für Kondensatoren mit einer Kapazität/Nennspannung von 1,5 µF/630 V wurden folgende Schallintensitäten gemessen:
- Bekannter Kondensator (Fig. 1b): φ = 66,3 dB, - 16,3 bis + 12,7 dB, σ = 8,5
- Neuer Kondensator (Fig. 1a): φ = 44,4 dB, - 7,4 bis + 5,6 dB, σ = 3,1.

Die Schallintensität wird gemäß den obigen Messungen also beim ersten Vergleich um 13,8 dB und beim zweiten Vergleich um 21,9 dB reduziert. Hierbei ist zu beachten, dass es sich bei der Dezibel-Skala um eine logarithmische Skala handelt, so dass eine Reduzierung um 10 dB bzw. 20 dB eine zehnfache bzw. hundertfache Schallreduzierung bedeutet. Anders ausgedrückt, bei einer Reduzierung um 10 dB erzeugt ein bekannter Kondensator die gleiche Schallintensität wie zehn neue Kondensatoren und bei einer Reduzierung um 20 dB erzeugt ein bekannter Kondensator die gleiche Schallintensität wie 100 neue Kondensatoren.

Darüber hinaus ist die Streuung der Messwerte, d.h. die Standardabweichung σ bei den neuen Kondensatoren erheblich geringer als bei den bekannten Kondensatoren.

Ein weiterer positiver Effekt ergab sich bei den neuen Kondensatoren nach der Dauergleichspannungsprüfung mit Nennspannung/1000 Stunden/100° C, nämlich dass die Kapazitäts- und Verlustfaktorabweichung bei den neuen Kondensatoren erheblich geringer als bei den bekannten Kondensatoren war.

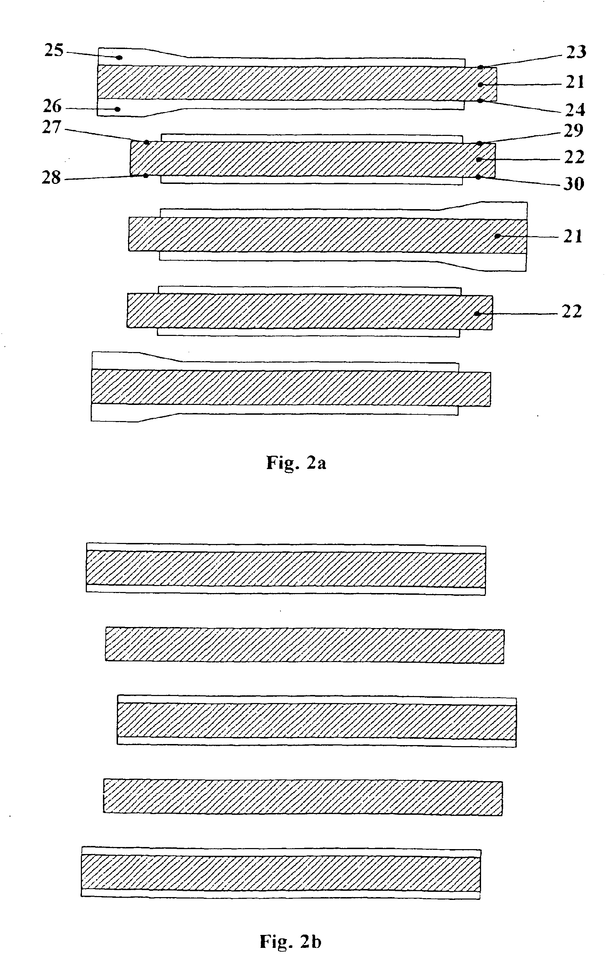

In Fig. 2a ist eine zweite Ausführungsform des erfindungsgemäßen Kondensators mit einer ersten Kunststoff-Folie 21 und einer zweiten Kunststoff-Folie 22 dargestellt. Die erste Kunststoff-Folie 21 weist an dem rechten Rand auf jeder Seite einen Freirand 23 und 24 und am linken Rand auf jeder Seite eine Randverstärkung 25 und 26 auf. Die zweite Kunststoff-Folie 22 weist an den Rändern auf jeder Seite Freiränder 27, 28, 29 und 30 auf. Wie dargestellt, weist der Kondensator einen Vier-Folien-Aufbau mit, von oben nach unten gezählt, einer ersten ersten Kunststoff-Folie 21, einer zweiten zweiten Kunststoff-Folie 22, einer um 180° zur ersten ersten Kunststoff-Folie verdrehten, zur ersten ersten Kunststoff-Folie versetzten dritten ersten Kunststoff-Folie 21 und einer vierten zweiten Kunststoff-Folie 22 auf. Die zweite Kunststoff-Folie 22 ist schmaler als die erste Kunststoff-Folie 21.

Die erste Kunststoff-Folie 21 besteht aus PET und die zweite Kunststoff-Folie 22 aus PET oder PP. Für die nachfolgenden Vergleichsmessungen wurde für die zweite Kunststoff-Folie 22 PP verwendet.

In Fig. 2b ist zu Vergleichszwecken ein entsprechender bekannter Kondensator aus dem Lieferprogramm der Anmelderin, dort mit MKP 10 bezeichnet, dargestellt. Wie man aus Fig. 2b erkennt, weist die erste Kunststoff-Folie weder Randverstärkungen noch Freiränder und die zweite Kunststoff-Folie keinerlei Metallisierungen auf. Die erste Kunststoff-Folie besteht ebenfalls aus PET und die zweite Kunststoff-Folie ebenfalls aus PP.

Folgende Schallintensitäten wurden bei den Kondensatoren gemäß Fig. 2a und 2b gemessen, wobei die Kondensatoren eine Kapazität/Nennspannung von 1,5 µF/250 V hatten:
- Bekannter Kondensator (Fig. 2b): φ = 46,1 dB, - 8,1 bis + 13,9 dB, σ = 4,9
- Neuer Kondensator (Fig. 2a): φ = 43,6 dB, - 6,1 bis + 3,9 dB, σ = 1,8.

Für Kondensatoren mit einer Kapazität/Nennspannung von 2,2 µF/630 V wurden folgende Schallintensitäten gemessen:
- Bekannter Kondensator (Fig. 2b): φ = 48,3 dB, - 7,3 bis + 12,2 dB, σ = 4,0
- Neuer Kondensator (Fig. 2a): φ = 46,7 dB, - 6,7 bis + 3,3 dB, σ = 1,4.

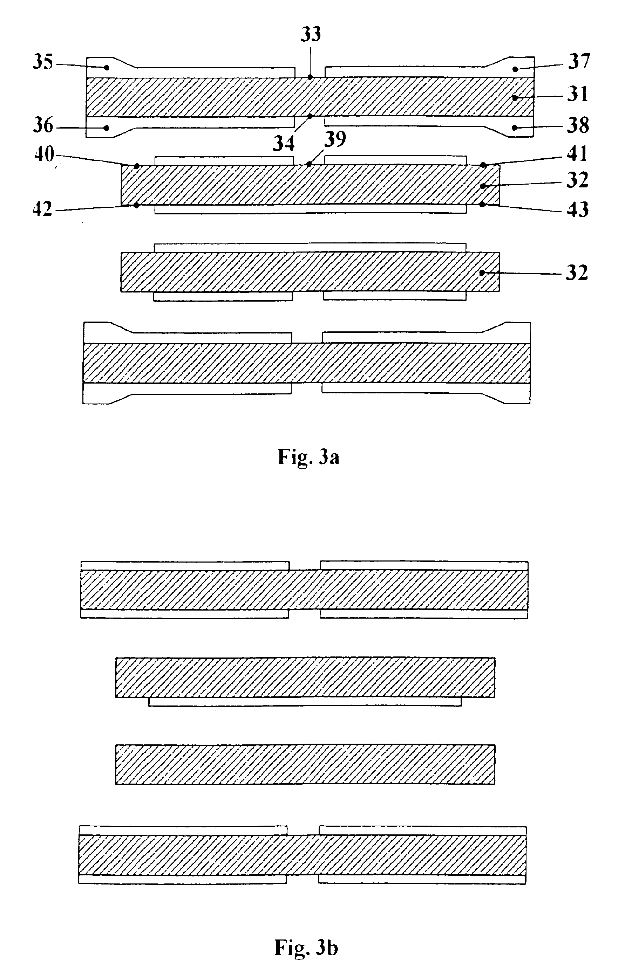

In Fig. 3a ist eine dritte Ausführungsform des erfindungsgemäßen Kondensators mit einer ersten Kunststoff-Folie 31 und einer zweiten Kunststoff-Folie 32 dargestellt. Die erste Kunststoff-Folie 31 weist auf beiden Seiten einen mittleren Freirand 33 und 34 und auf beiden Seiten an den Rändern Randverstärkungen 35, 36, 37 und 38 auf. Die zweite Kunststoff-Folie 32 weist auf ihrer oberen Seite einen mittleren Freirand 39 und an den Rändern Freiränder 40 und 41 und auf der unteren Seite an den Rändern Freiränder 42 und 43 auf. Wie dargestellt, weist der Kondensator einen Drei-Folien-Aufbau mit einer interner Reihenschaltung und mit, von oben nach unten gezählt, einer ersten ersten Kunststoff-Folie 31, einer zweiten zweiten Kunststoff-Folie 32 und einer um 180° zur zweiten zweiten Kunststoff-Folie 32 verdrehten dritten zweiten Kunststoff-Folie 32 auf. Die zweite Kunststoff-Folie 32 ist schmaler als die erste Kunststoff-Folie 31.

Die erste Kunststoff-Folie 31 besteht aus PET und die zweite Kunststoff-Folie 32 besteht aus PET oder PP. Für die nachfolgenden Vergleichsmessungen wurde für die zweite Kunststoff-Folie 32 PP verwendet.

In Fig. 3b ist zu Vergleichszwecken ein entsprechender bekannter Kondensator aus dem Lieferprogramm der Anmelderin, dort mit MKP 10 bezeichnet, dargestellt. Wie man aus Fig. 3b erkennt, weist die erste Kunststoff-Folie keine Randverstärkungen und die zweite Kunststoff-Folie keine Metallisierung auf ihrer oberen Seite auf. Darüber hinaus weist die dritte zweite Kunststoff-Folie in diesem bekannten Drei-Folien-Aufbau überhaupt keine Metallisierung auf.

Die erste Kunststoff-Folie besteht ebenfalls aus PET und die zweite Kunststoff-Folie ebenfalls aus PP.

Folgende Schallintensitäten wurden bei den Kondensatoren gemäß den Fig. 3a und 3b gemessen, wobei die Kondensatoren eine Kapazität/Nennspannung von 0,68 µF/630 V hatten:
- Bekannter Kondensator (Fig. 3b): φ = 44,3 dB, - 10,8 bis + 9,2 dB, σ = 5,0
- Neuer Kondensator (Fig. 3a): φ = 37,1 dB, - 4,1 bis + 6,4 dB, σ = 2,0.

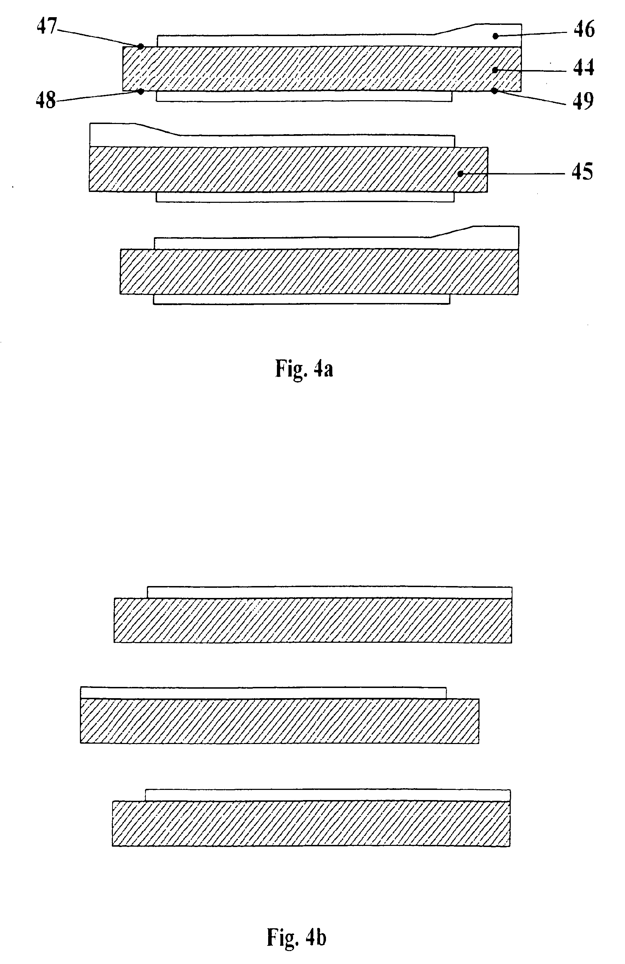

In Fig. 4a ist eine vierte Ausführungsform des erfindungsgemäßen Kondensators mit einer ersten Kunststoff-Folie 44 und einer zweiten Kunststoff-Folie 45 dargestellt, die identisch beidseitig metallisiert sind mit jeweils auf der oberen Seite einer Randverstärkung 46 und einem Freirand 47 und auf der unteren Seite mit zwei Freirändern 48 und 49. Die Metallisierung ist auf beiden Seiten gleich dick. Die zweite Kunststoff-Folie 45 ist hierbei im Verhältnis zur ersten Kunststoff-Folie 44 um 180° verdreht und versetzt angeordnet.

Die erste Kunststoff-Folie 44 besteht aus PET oder PP und die zweite Kunststoff-Folie besteht ebenfalls aus PET oder PP. Für die nachfolgenden Vergleichsmessungen wurde für beide Kunststoff-Folien PET verwendet.

In Fig. 4b ist zu Vergleichszwecken ein entsprechender bekannter Kondensator aus dem Lieferprogramm der Anmelderin, dort als MKS 4 bezeichnet, dargestellt. Wie man aus Fig. 4b erkennt, weisen die Kunststoff-Folien keine Randverstärkungen und auf ihrer unteren Seite keine Metallisierung auf. Beide Kunststoff-Folien bestehen ebenfalls aus PET.

Folgende Schallintensitäten wurden bei den Kondensatoren gemäß Fig. 4a und 4b gemessen, wobei die Kondensatoren eine Kapazität/Nennspannung von 3,3 µF/250 V hatten:
- Bekannter Kondensator (Fig. 4b): φ = 58,9 dB, ± 12,0, σ = 10,6
- Neuer Kondensator (Fig. 4a): φ = 47,5 dB, ± 1,5, σ = 0,68.

### Bezugszeichenliste

- 1: Wechselspannungsgenerator
- 2: Verstärker
- 3: Vorwiderstand
- 4: Kondensator
- 5: Mikrofon
- 6: Verstärker
- 7: Schallintensität-(Dezibel)-Messgerät
- 8: Erste Kunststoff-Folie
- 9: Zweite Kunststoff-Folie
- 10: Metallisierung
- 11: Mittlerer Freirand
- 12: Randverstärkung
- 13: Randverstärkung
- 14: Freirand
- 15: Freirand
- 16: Freirand
- 17: Freirand
- 18: Mittlerer Freirand
- 19: Freirand
- 20: Freirand
- 21: Erste Kunststoff-Folie
- 22: Zweite Kunststoff-Folie
- 23: Freirand
- 24: Freirand
- 25: Randverstärkung
- 26: Randverstärkung
- 27: Freirand
- 28: Freirand
- 29: Freirand
- 30: Freirand
- 31: Erste Kunststoff-Folie
- 32: Zweite Kunststoff-Folie
- 33: Mittlerer Freirand
- 34: Mittlerer Freirand
- 35: Randverstärkung
- 36: Randverstärkung
- 37: Randverstärkung
- 38: Randverstärkung
- 39: Mittlerer Freirand
- 40: Freirand
- 41: Freirand
- 42: Freirand
- 43: Freirand
- 44: Erste Kunststoff-Folie
- 45: Zweite Kunststoff-Folie
- 46: Randverstärkung
- 47: Freirand
- 48: Freirand
- 49: Freirand

## Patentansprüche

1. Verwendung eines metallisierten Kunststoff-Folienkondensators mit beidseitig metallisierten Kunststoff-Folien (8, 9; 21, 22; 31, 32; 44, 45), bei dem im Betrieb der verbleibende Luftspalt zwischen jeweils benachbarten Kunststoff-Folien feldfrei ist, um die Kunststoff-Folien nicht mit einer Kraft zu beaufschlagen, die diese in Schall erzeugende Bewegungen versetzt, für Anwendungen mit der Anforderung reduzierter Schallintensität.

2. Metallisierter Kunststoff-Folienkondensator mit zwei beidseitig metallisierten Kunststoff-Folien, wobei die beiden Kunststoff-Folien (8, 9) unterschiedliche Metallisierungen (10) aufweisen, **dadurch gekennzeichnet, dass** im Betrieb der verbleibende Spalt zwischen jeweils benachbarten Kunststoff-Folien feldfrei ist, um die Kunststoff-Folien nicht mit einer Kraft zu beaufschlagen, die diese in Schall erzeugende Bewegungen versetzt, und dass die erste Kunststoff-Folie (8) auf einer Seite einen mittleren Freirand (11) und auf der anderen Seite an jedem Rand einen Freirand (14, 15) und die zweite Kunststoff-Folie (9) auf einer Seite an jedem Rand einen Freirand (16, 17) und auf der anderen Seite einen mittleren Freirand (18) und an jedem Rand einen Freirand (19, 20) aufweist, wobei der Kondensator einen Zwei-Folien-Aufbau aufweist mit einer internen Reihenschaltung und mit einer ersten ersten Kunststoff-Folie und einer zweiten zweiten Kunststoff-Folie.

3. Kondensator nach Anspruch 2, **dadurch gekennzeichnet, dass** die Metallisierung der ersten Kunststoff-Folie (8) auf der Seite mit dem mittleren Freirand (11) Randverstärkungen (12, 13) aufweist.

4. Kondensator nach Anspruch 2 oder 3, **dadurch gekennzeichnet, dass** die zweite Kunststoff-Folie (9) schmaler ist als die erste Kunststoff-Folie (8).

5. Kondensator nach einem der Ansprüche 2 bis 4, **dadurch gekennzeichnet, dass** die erste Kunststoff-Folie (8) aus PET oder PP und die zweite Kunststoff-Folie (9) aus PET oder PP besteht.

6. Metallisierter Kunststoff-Folienkondensator mit zwei beidseitig metallisierten Kunststoff-Folien, wobei die beiden Kunststoff-Folien (21, 22) unterschiedliche Metallisierungen (10) aufweisen, **dadurch gekennzeichnet, dass** im Betrieb der verbleibende Spalt zwischen jeweils benachbarten Kunststoff-Folien feldfrei ist, um die Kunststoff-Folien nicht mit einer Kraft zu beaufschlagen, die diese in Schall erzeugende Bewegungen versetzt, und dass die erste Kunststoff-Folie (21) auf jeder Seite an einem Rand einen Freirand (23. 24) und die zweite Kunststoff-Folie (22) auf jeder Seite an jedem Rand einen Freirand (27, 28, 29, 30) aufweist, wobei der Kondensator einen Vier-Folien-Aufbau aufweist mit einer ersten ersten Kunststoff-Folie, einer zweiten zweiten Kunststoff-Folie, einer um 180° zur ersten ersten Kunststoff-Folie verdrehten, zur ersten ersten Kunststoff-Folie versetzten dritten ersten Kunststoff-Folie und einer vierten zweiten Kunststoff-Folie.

7. Kondensator nach Anspruch 6, **dadurch gekennzeichnet, dass** die Metallisierung der ersten Kunststoff-Folie (21) jeweils auf dem dem Freirand gegenüberliegenden Rand Randverstärkungen (25, 26) aufweist.

8. Kondensator nach Anspruch 6 oder 7, **dadurch gekennzeichnet, dass** die zweite Kunststoff-Folie (22) schmaler ist als die erste Kunststoff-Folie (21).

9. Kondensator nach einem der Ansprüche 6 bis 8, **dadurch gekennzeichnet, dass** die erste Kunststoff-Folie (21) aus PET und die zweite Kunststoff-Folie (22) aus PET oder PP besteht.

10. Metallisierter Kunststoff-Folienkondensator mit zwei beidseitig metallisierten Kunststoff-Folien, wobei die beiden Kunststoff-Folien (31, 32) unterschiedliche Metallisierungen (10) aufweisen, **dadurch gekennzeichnet, dass** im Betrieb der verbleibende Spalt zwischen jeweils benachbarten Kunststoff-Folien feldfrei ist, um die Kunststoff-Folien nicht mit einer Kraft zu beaufschlagen, die diese in Schall erzeugende Bewegungen versetzt, und dass die erste Kunststoff-Folie (31) auf jeder Seite einen mittleren Freirand (33, 34) und die zweite Kunststoff-Folie (32) auf einer Seite einen mittleren Freirand (39) und an jedem Rand einen Freirand (40, 41) und auf der anderen Seite an jedem Rand einen Freirand (42, 43) aufweist, wobei der Kondensator einen Drei-Folien-Aufbau aufweist mit interner Reihenschaltung und mit einer ersten ersten Kunststoff-Folie, einer zweiten zweiten Kunststoff-Folie und einer um 180° zur zweiten zweiten Kunststoff-Folie verdrehten dritten zweiten Kunststoff-Folie.

11. Kondensator nach Anspruch 10, **dadurch gekennzeichnet, dass** die Metallisierung der ersten Kunststoff-Folie (31) auf beiden Seiten Randverstärkungen (35, 36, 37, 38) aufweist.

12. Kondensator nach Anspruch 10 oder 11, **dadurch gekennzeichnet, dass** die zweite Kunststoff-Folie (32) schmaler ist als die erste Kunststoff-Folie (31).

13. Kondensator nach einem der Ansprüche 10 bis 12, **dadurch gekennzeichnet, dass** die erste Kunststoff-Folie (31) aus PET und die zweite Kunststoff-Folie (32) aus PET oder PP besteht.

14. Metallisierter Kunststoff-Folienkondensator mit einem Zwei-Folien-Aufbau mit zwei identisch beidseitig metallisierten Kunststoff-Folien (44, 45), wobei die zweite Kunststoff-Folie (45) zur ersten Kunststoff-Folie (44) um 180° verdreht ist, die Metallisierungen auf beiden Seiten der Kunststoff-Folien (44, 45) gleich dick und die beiden Kunststoff-Folien (44, 45) zueinander versetzt sind, **dadurch gekennzeichnet, dass** im Betrieb der verbleibende Spalt zwischen jeweils benachbarten Kunststoff-Folien feldfrei ist, um die Kunststoff-Folien nicht mit einer Kraft zu beaufschlagen, die diese in Schall erzeugende Bewegungen versetzt, und dass die Kunststoff-Folien (44, 45) auf einer Seite an einem Rand einen Freirand (47) und auf der anderen Seite an den Rändern Freiränder (48, 49) aufweisen.

15. Kondensator nach Anspruch 14, **dadurch gekennzeichnet, dass** die Metallisierung der Kunststoff-Folien (44, 45) auf der Seite mit einem Freirand (47) an dem diesem Freirand gegenüberliegenden Rand eine Randverstärkung (46) aufweist.

16. Kondensator nach Anspruch 14 oder 15, **dadurch gekennzeichnet, dass** die erste Kunststoff-Folie (44) aus PET oder PP und die zweite Kunststoff-Folie (45) aus PET oder PP besteht.
